Europäisches Patentamt

European Patent Office

Office européen des brevets

(11) Publication number: **0 114 761**
**B1**

(12) **EUROPEAN PATENT SPECIFICATION**

(45) Date of publication of patent specification: **14.10.87**

(21) Application number: **84400040.6**

(22) Date of filing: **09.01.84**

(51) Int. Cl.⁴: **H 04 B 7/17, H 04 L 27/04**

(54) **16-Quadrature amplitude modulation modulator for radio links.**

(30) Priority: **07.01.83 FR 8300204**

(43) Date of publication of application:
**01.08.84 Bulletin 84/31**

(45) Publication of the grant of the patent:
**14.10.87 Bulletin 87/42**

(84) Designated Contracting States:
**DE GB IT NL**

(56) References cited:
**FR-A-2 482 339**
**GB-A-2 073 516**
**US-A-3 573 644**
**US-A-3 619 782**
**INTERNATIONAL CONFERENCE ON COMMUNICATIONS, Conference Record, vol. 1 of 4, Boston, 10th-14th June 1979, pages 5.8.1 - 5.8.5, USA D.P. TAYLOR et al.: "Conceptual design of a four bits/HZ radio system"**

**INTERNATIONAL CONFERENCE ON COMMUNICATIONS NACHRICHTENTECHNISCHE ZEITSCHRIFT, vol. 33, no. 10, October 1980, pages 668-672, Berlin, DE. A. PLATTNER et al.: "40-GHz-Kommunikationssysteme"**

(73) Proprietor: **SOCIETE ANONYME DE TELECOMMUNICATIONS**
**41, rue Cantagrel**
**F-75624 Paris Cedex 13 (FR)**

(72) Inventor: **Lods, Jean**
**41, rue Cantagrel**
**F-75624 Paris Cédex 13 (FR)**
Inventor: **Trinh, Van Christian**
**41, rue Cantagrel**
**F-75624 Paris Cédex 13 (FR)**

(74) Representative: **Martinet & Lapoux**
**62, rue des Mathurins**
**F-75008 Paris (FR)**

(56) References cited:
**IEEE TRANSACTIONS ON COMMUNICATIONS, vol. COM-30, no. 3, March 1982, pages 517-522, New York, USA D.H. MORAIS et al.: "NLA-QAM: A method for generating high-power QAM signals through nonlinear amplification"**

**COMMUTATION & TRANSMISSION, vol. 2, no. 3, September 1980, pages 33-54, Paris, FR. M. CAMAND et al.: "Faisceau Hertzien FHN 13-06 A 2 x 34 Mbit/s dans la bande 12,75 à 13,25 GHz"**

## Description

The present invention generally relates to quadrature amplitude modulation (QAM) and particularly to nonlinear amplified quadrature amplitude modulation. More precisely, the invention relates to 16-QAM phase and amplitude modulation systems.

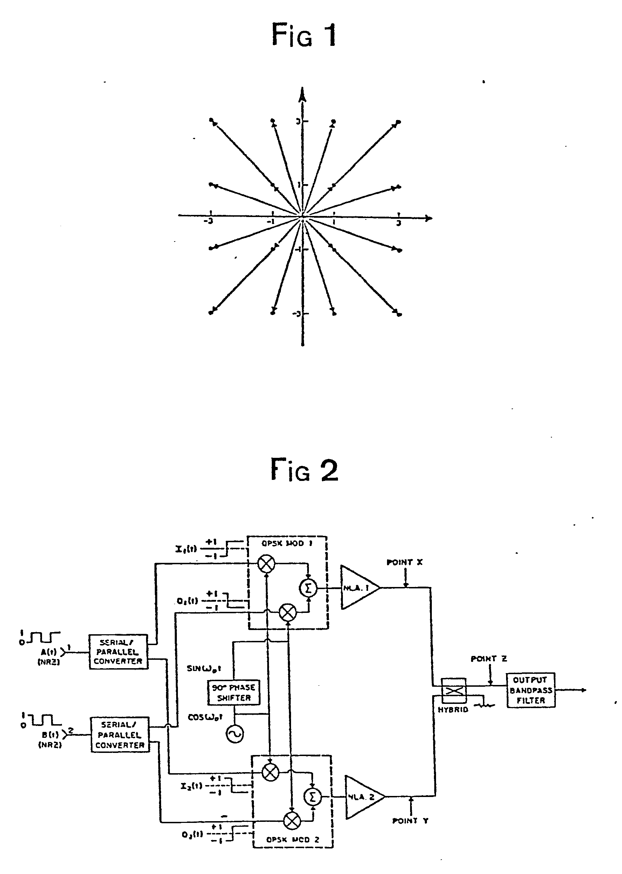

The signal space diagram of a 16-QAM system is represented in Figure 1. It results from the cophasal composition of two four-phase modulated signals the amplitude of one four-phase modulated signal being 6 dB below the other.

Systems for modulating the phase of a carrier wave by the digital pulses of a binary message have already been proposed. The better known of these are two-, four- or eight-phase systems. Thus, for a two-phase-state modulation, each bit carrying value 1 is represented by a carrier wave whose phase is the reference phase or phase 0 whereas each bit carrying value 0 is represented by a carrier wave whose phase is shifted by $\pi$ compared to the foregoing one. In the four-phase-state modulation case, a carrier wave is caused to take each of four different phase values depending on the value assumed by each group of two successive bits whereupon the phase is one of four equidistant phases spaced apart by $\pi/2$ of such wave.

For spectrum reduction reasons, the new generations of digital radio links make use of amplitude and phase multistate modulation and more particularly of 16 amplitude-and-phase-state modulation. Multistate systems utilize a narrower passband and improve the efficiency in bits per second per Hertz. The 16 QAM constellation signal was in fact impossible to nonlinearly amplify due to the fact that it comprises an amplitude modulation component and a phase modulation component. Therefore, the transmitter of such a signal must operate at a level of 8 to 10 dB below saturation. This implies, on the one hand, the need to use microwave components with extensive margins with respect to their nominal power and, on the other hand, a very low energy yield and hence high consumption. A linearly amplified 16-QAM modulator is therefore not very reliable and inefficient energy-wise.

An improvement was put forward in the document IEEE transactions on Communications Vol. com. 30 No. 3 of March 1982 by Douglas H. Morais, and Kamilo Feher. In this article, the 16 phase and amplitude state transmitting system is regarded as the combination through summation of two four-phase modulators where each of these two component modulators operates independently and, in particular, the output signals of the modulators is amplified separately by means of an amplifier working nonlinearly. This form of amplification, which has a tendency to convert amplitude-modulation to phase-modulation, is made possible solely because the 16-QAM signal is built up by summation after amplification of both four-phase-state modulated carriers.

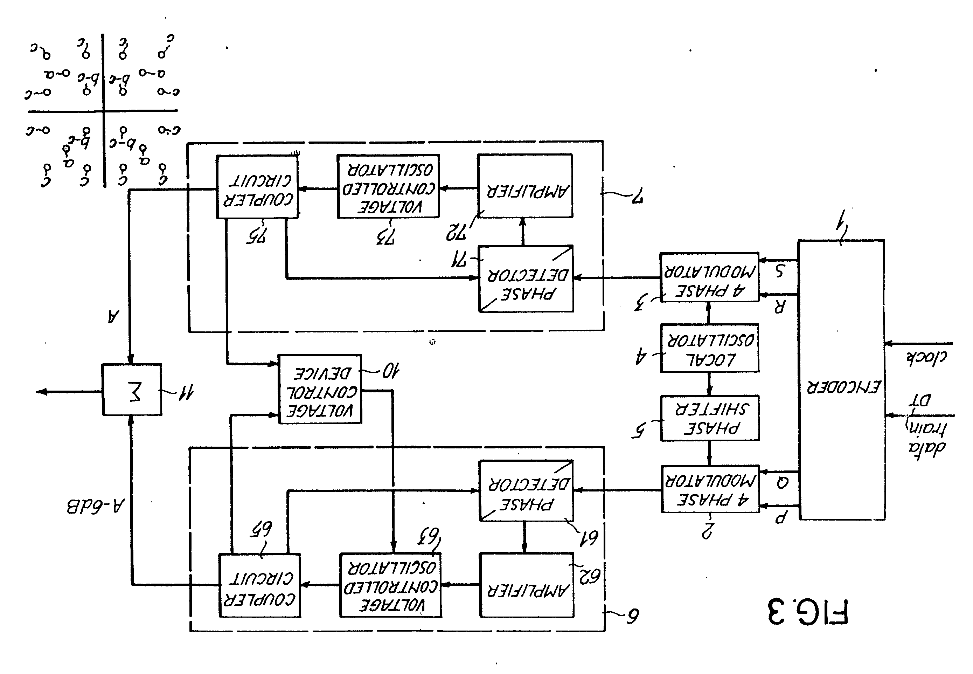

The prior art is disclosed in the abovementioned article of Douglas H. Morais and Kamilo Feher and is summarized with reference to Figure 2.

Figure 2 shows two asynchronous non return to zero (NRZ) data streams A(t) and B(t), of the same nominal bit rate, present at input points 1 and 2. Each stream is converted into two synchronous streams by a serial-to-parallel converter. The outputs from the converter accepting the A streams are labeled $I_1$ and $I_2$; the outputs from the second converter are labeled $Q_1$ and $Q_2$. $I_1$ and $Q_1$ feed "QPSK modulator 1" and $I_2$ and $Q_2$ feed "QPSK modulator 2", these being standard quaternary phase shift keying (QPSK) modulators. Note, however, that they are both driven by the same carrier source. There, an input data stream is converted into two synchronous streams which form I and Q inputs to one modulator, and the other input data streams is similarly converted into two synchronous streams which form the I and Q inputs to the second modulator.

The outputs of the QPSK modulators are amplified by nonlinear amplifiers. These amplifiers have equal gain and are operated so as to give the maximum peak output voltage available. Because the QPSK modulated signals are unfiltered, they contain no AM modulation, and thus suffer no data dependent degradation from the nonlinear amplification. The outputs of the two amplifiers are combined in a hybrid as shown. The coupling coefficient $\gamma$ of this hybrid is given a suitable·value explained in the article.

However, although this 16-QAM modulator design affords advantages as far as the possible output power level is concerned, there are problems stemming from the complexity of the amplifiers. Indeed, the problems raised by the operation of transistor amplifiers are well known. The considerable gain to be achieved on the transmission chain and the low gain per elementary amplifying stage mean placing a high number of stages in cascade, these amplifier stages being separated by separator stages.

Further, to obtain the 16-QAM signal as perfectly as possible from two four-phase-state modulated signals, the phases and the relative levels of the latter must be constant at the output from the two nonlinear amplifiers. This implies that the variations in the transfer function of each amplifier be identical for any environmental change.

Patent Application GB—A—2 073 516 discloses an arrangement for amplifying a modulated carrier signal the amplitude variations of which are smaller than the amplitude of the unmodulated carrier, characterized by comprising a first and a second controlled oscillator, each having a control input and an output, which oscillators are connected by means of their respective control inputs to a control circuit and are operable to oscillate a substantially constant amplitude and at a frequency which substantially corresponds to the carrier frequency, the output of each oscillator being coupled to the control circuit for generating control signals for the oscillators from comparisons between the modulated carrier signal and the oscillator signals, the arrangement also having an output circuit connected to the outputs of the oscillators for vectorially assembling an output signal. In this amplifying arrangement each signal to be amplified is divided into two paths with the signal in each path being applied to a respective phase loop each including an oscillator having a frequency equal to the carrier frequency of the signal to be amplified.

The present invention further advocates nonlinear amplification of both four-phase-state modulated signals before their summation. This amplification is however performed with the help of two amplification and modulation transfer devices (AMTD) each employing a single microwave component. These devices make it possible, to retain easily the relative amplitudes and phases of the two four-phase-state modulated signals.

The (AMTD) device is used when the carrier wave of the four-phase-state modulated signal is selected in the microwave range. It is replaced by a device for amplification and modulation transfer transposition (AMTTD) in the case where the modulated carrier wave is generated at intermediate frequency, whereas the microwave transposition is then performed in each phase loop.

The 16-quadrature amplitude modulator for radio links, converting a train of data into signals having a phase selected out of 16 phase values and an amplitude selected out of four amplitude values, according to the invention comprises

means for dividing said data train into four bit trains (P, Q, R, S);

two four-phase modulators (2, 3);

a carrier wave generator (4) for feeding said two four-phase modulators;

means for applying said four bit trains by groups of two respectively to said four-phase modulators, and is characterised in that it further comprises

two phase loops (6, 7) each including a voltage controlled microwave oscillator (63, 73) a differential phase detector (61, 71) associated with said oscillator, said differential phase detectors being respectively connected to the output of a four-phase modulator and the output of the associated oscillator and controlling said voltage controlled microwave oscillator; means for adding predetermined parts of the output signals of the two phase loops, and an amplitude comparator (10) of the output signals of the oscillators of the two loops which is connected to the input of one of the two oscillators (63, 73) whereby the output amplitudes of the two loops are maintained in a predetermined ratio.

In a first embodiment, the carrier wave is generated by a local generator in the microwave range.

In a second embodiment, the oscillator supplying the carrier wave to the four-phase modulators has a frequency in the intermediate frequency range and a local oscillator transposes through frequency changers inserted in the loops the frequency of the loops to this intermediate frequency.

Other advantages and features will become clear from the following description accompanied by the relevant drawings in which:

Figures 1 and 2 have been already commented in the introduction part;

Figure 3 represents a 16-QAM modulator according to the invention;

Figure 4 is a variation of Figure 3; and

Figure 5 is a detailed view of the amplifiers included in the loops of the 16-QAM modulators of Figures 3 and 4.

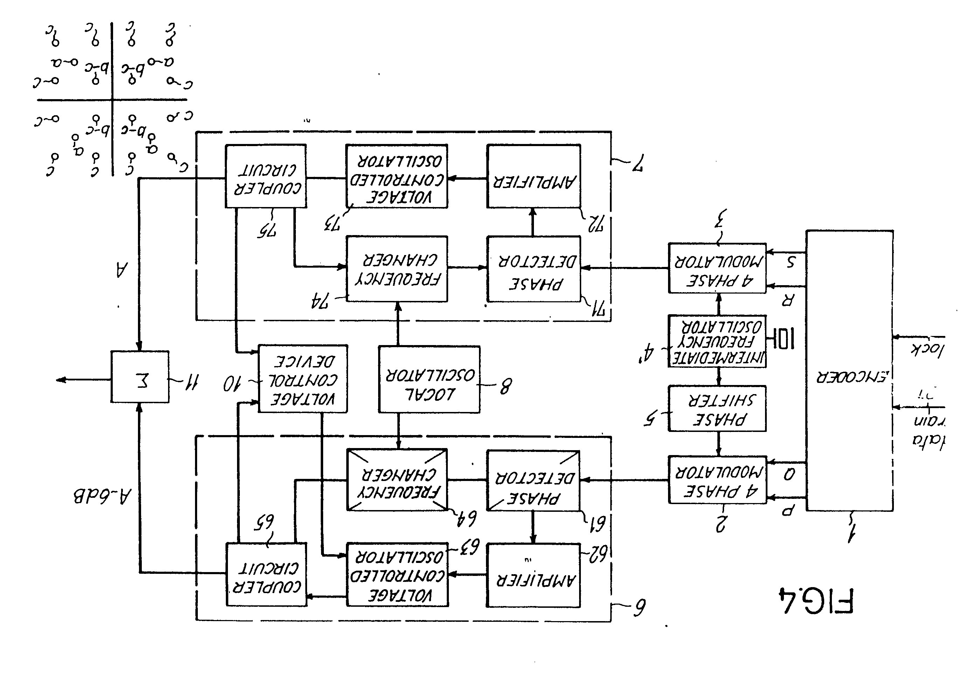

With reference to Figure 3, the incoming data train DT is fed to the input of an encoder 1 that divides it and encodes it into four bit trains P, Q, R, S. These digital trains are fed in groups of two to the input of each of two four-phase-state modulators 2 and 3. These modulators receive a carrier wave generated by the local oscillator 4. Modulators 2 and 3 produce two four-phase modulation signals. These signals are each respectively fed to the input of two phase loops 6 and 7 that maintain the phase of respective power microwave oscillators 63 and 73 equal to the phase of the loop input signals.

The phase loop 6 consists essentially of a phase detector 61 receiving, on the one hand, the signal modulated by modulator 2 (four phase state signal) and, on the other hand, part of the signal supplied by voltage-controlled oscillator 63 across output coupler 65. The error voltage proportional to the phase shift between these two signals is amplified by a loop amplifier 62 delivering a voltage deviation sufficient to control the tuning diode in power microwave oscillator 63. The signal delivered by oscillator 63 is transmitted by means of output coupler 65 to the input of summing circuit 11.

Loop 7 is identical to loop 6 and its components are designated to reference numerals having 7 as ten digit and the same unit digit as loop 6.

The output signals of loops 6 and 7 are summed in summing circuit 11 which forms, the 16-QAM signal. The passband of loop 6 for instance, depends on the product $A(P) K_o K_d$ where $A(P)$ represents the gain of loop amplifier 62, $K_o$ in Hertz/Volt the slope of microwave oscillator 63 and $K_d$ in radians per volt the slope of phase detector 61. For stability reasons, this passband cannot be increased arbitrarily because of the phase shifts prevailing in the loop: oscillator, phase detector, error amplifier and all lengths of microwave line. The error amplifier is thus an essential member of the phase loop.

The qualities sought after in amplifier 62 are to amplify the signals from the phase detector with constant gain and minimum phase shift and to deliver a high D.C. voltage compatible with the tuning in voltage controlled oscillator 63.

An error amplifier 62 exhibiting all these advantageous features will be illustrated later in the description.

The two signals from phase loops 6 and 7 must be cophasal and have amplitudes differing by 6dB. A variable phase-shifter 5 (Figure 3) and an automatic level control device 10 are provided.

The variable phase-shifter 5 mounted at the output from local oscillator 4 makes it possible to adjust the static phase of the carrier wave of modulator 2 with respect to that of modulator 3 and thus the phase of voltage controlled oscillator 63 with respect to that of oscillator 73.

The automatic level control device 10 cues the power level of voltage controlled microwave oscillator 63 to the power level of voltage controlled microwave oscillator 73 so that the signal levels at the outputs from phase loops 6 and 7 are always held at an offset of 6 dB. Phase shifter 5 and control device 10 thereby make it possible to eliminate any dependency between the phase adjustment and relative levels of the two carrier waves of modulators 2 and 3.

It is known that a phase loop recopies without distorsion the phase modulation of the signal fed to its input if the modulation frequency is lower than the loop passband of the ATM system (with no transposition) such as 6 and 7.

Therefore, to transmit high digital bit rates with a device such as this, the ATM system such as 6 or 7 must have a loop passband much wider than the digital bit rate to be transmitted.

In Figure 4, the local oscillator 4 is no longer a microwave oscillator. It is replaced by an intermediate frequency oscillator 4' and a second oscillator 8 is provided which has a frequency equal to the microwave frequency plus or minus the intermediate frequency. For instance, the intermediate frequency is comprised between 70 and 140 MHz and the microwave frequency is comprised between 2 and 15 GHz. Frequency changers 64 and 74 are inserted in the loops 6 and 7, respectively between coupling circuits 65 and 75 and phase detectors 61 and 71. The 16-QAM modulator of Figure 4 is otherwise identical to that of Figure 3.

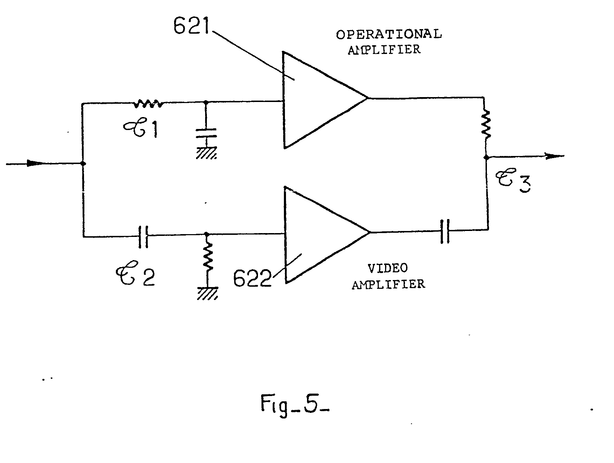

The amplifier in Figure 5 provides a way of dissociating the low-frequency amplification function, with high voltage deviation, from video amplification for low amplitude signals. In this way, the video amplification can be achieved with low power transistors having a very high transition frequency. The error amplifier 62 is therefore made up of an operational amplifier 621 coupled via RC circuitry to a video amplifier 622. This type of amplifier 62 further offers the advantage of allowing highly differing gains for each of the amplifier paths. A very high D.C. gain, greater than 80 dB, prevents the static phase of the carrier wave of the 16-QAM modulator from varying with respect to that of the carrier of modulators 2 and 3 when the voltage in one of the microwave oscillator tuning diodes varies. This voltage variation considered at the input of amplifier 62 is divided by its D.C. gain and as a result, the operating point on the phase detector characteristic curve varies only very slightly.

The gain in video amplifier 622 is adjusted independently of the D.C. gain to obtain the maximum loop passband taking into account the loop stability criteria.

The time constants $T_1$, $T_2$ and $T_3$ are selected such that the frequency at which the gain modulus for amplifiers 621 and 622 become equal, i.e. sufficiently low with respect to the loop band that any distorsions in the amplification transfer function are compressed by the phase loop.

In Figures 3 and 4, the 16-quadrature amplitude modulator signal is represented. The points a represent the signals from modulator 2; the points b represent the signals from modulator 3 and the signals C represent the 16-quadrature amplitude signal. It should be noted that some points are marked at the same time b and C.

## Claims

1. A 16-quadrature amplitude modulator for radio links, converting a train of data into signals having a phase selected out of 16 phase values and an amplitude selected out of four amplitude values, said modulator comprising
means for dividing said data train into four bit trains (P, Q, R, S);
two four-phase modulators (2, 3);
a carrier wave generator (4) for feeding said two four-phase modulators;
means for applying said four bit trains by groups of two respectively to said four-phase modulators, characterised in that it further comprises
two phases loops (6, 7) each including a voltage controlled microwave oscillator (63, 73), a differential phase detector (61, 71) associated with said oscillator, said differential phase detectors being respectively connected to the output of a four-phase modulator and the output of the associated oscillator and controlling said voltage controlled microwave oscillator; means for adding predetermined parts of the output signals of the two phase loops, and an amplitude comparator (10) of the output signals of the oscillators of the two loops which is connected to the input of one of the two oscillators (63, 73) whereby the output amplitudes of the two loops are maintained in a predetermined ratio.

2. A 16-quadrature amplitude modulator according to claim 1 characterized in that the ratio between the output amplitudes of the two loops is 6 dB.

3. A 16-quadrature amplitude modulator according to claim 1 characterized in that a phase shifter (5) is provided between an output of the carrier wave generator (4) and an input of one of the four phase modulators, this phase shifter maintaining cophasal the outputs of the two four-phase modulators.

4. A 16-quadrature amplitude modulator according to claim 1 characterized in that an amplifier (64, 74) is provided in each phase loop between the differential phase detector and the voltage controlled oscillator, said amplifier consisting of two parallel-mounted amplifiers, the one an operational amplifier, the other a video amplifier, said operational and video amplifiers being coupled via resistor capacitor circuitry.

## Patentansprüche

1. 16-QAM-Modulator für Richtfunkverbindungen, bei dem ein Datenstrom in Signale umgesetzt wird, deren Phase aus 16 Phasenwerten und deren Amplitude aus vier Amplitudenwerten ausgewählt sind, mit Dividiereinrichtungen, die den Datenstrom in Vierbitströme (P, Q, R, S) unterteilen, zwei Vierphasen-Modulatoren (2, 3), einem Trägerwellengenerator (4) zur Versorgung der beiden Vierphasen-Modulatoren, sowie mit Mitteln, die die Vierbitströme in Zweier-Gruppen jeweils den Vierphasen-Modulatoren zuführen, gekennzeichnet durch zwei-Phasenschleifen (6, 7), von denen jede einen spannungsgesteuerten Microwellenoszillator (63, 73), einen dem Oszillator zugeordneten Phasendifferenzdetektor (61, 71) aufweist, wobei die Phasendifferenzdetektoren jeweils mit dem Ausgang eines Vierphasen-Modulators und dem Ausgang des zugehörigen Oszillators verbunden sind und den spannungsgesteuerten Microwellenoszillator steuern, sowie durch Mittel, die vorbestimmte Teile der Ausgangssignale der zwei Phasenschleifen addieren, und durch einen Amplitudenkomparator (10) der Ausgangssignale der Oszillatoren der beiden Schleifen, der mit dem Eingang eines der beiden Oszillatoren (63, 73) verbunden ist, wodurch die Ausgangsamplituden der beiden Schleifen in einem vorbestimmten Verhältnis erhalten bleiben.

2. 16-QAM-Modulator nach Anspruch 1, dadurch gekennzeichnet, daß das Verhältnis zwischen den Ausgangsamplituden der beiden Schleifen 6 dB beträgt.

3. 16-QAM-Modulator nach Anspruch 1, dadurch gekennzeichnet, daß ein Phasenschieber (5) zwischen einem Ausgang des Trägerwellengenerators (4) und einem Eingang eines der Vierphasen-Modulatoren vorgesehen ist, wobei der Phasenschieber die Gleichphasigkeit der Ausgänge der zwei Vierphasen-Modulatoren aufrechterhält.

4. 16-QAM-Modulator nach Anspruch 1, dadurch gekennzeichnet, daß ein Verstärker (64, 74) in jeder Phasenschleife zwischen dem Phasendifferenzdetektor und dem spannungsgesteuerten Oszillator vorgesehen ist, wobei der Verstärker aus zwei parallel befestigten Verstärkern besteht, von denen einer ein Operationsverstärker und der andere ein Videoverstärker ist, und wobei der Operationsverstärker und der Videoverstärker über eine Widerstands-Kapazitätsschaltung gekoppelt sind.

## Revendications

1. Modulateur d'amplitude à 16 quadratures pour liaisons radio convertissant un train de données en signaux ayant une phase choisie parmi 16 valeurs de phase et une amplitude choisie parmi 4 valeurs d'amplitude, ledit modulateur comprenant:
des moyens de diviser ledit train de données en trains de quatre bits (P, Q, R, S);
deux modulateurs à quatre phases (2, 3);
un générateur d'onde porteuse (4) pour alimenter les deux modulateurs à quatre phases;
des moyens d'appliquer lesdits trains à quatre bits par groupe de deux respectivement auxdits modulateurs à quatre phases;
caractérisé en ce qu'il comprend en outre:
deux boucles de phase (6, 7) composées chacune d'un oscillateur (63, 73) à micro-onde commandé par tension, un détecteur de phase différentiel (61, 71) associé avec ledit oscillateur, lesdits détecteurs de phase différentiels étant respectivement connectés à la sortie d'un modulateur à quatre phases et à la sortie de l'oscillateur associé et commandant ledit oscillateur à micro-onde commandé par tension; des moyens pour additionner des fractions prédéterminées des signaux de sortie des deux boucles de phase, et un comparateur d'amplitude (10) des signaux de sortie des oscillateurs des deux boucles qui est connecté à l'entrée de l'un des deux oscillateurs (63, 73) d'où il résulte que les amplitudes des deux boucles sont maintenues dans un rapport prédéterminé.

2. Modulateur d'amplitude à 16 quadratures conforme à la revendication 1, caractérisé en ce que le rapport entre les amplitudes de sortie des deux boucles est 6 dB.

3. Modulateur d'amplitude à 16 quadratures conforme à la revendication 1, caractérisé en ce qu'un déphaseur (5) est prévu entre une sortie du générateur d'onde porteuse (4) et une entrée de l'un des modulateurs à quatre phases, ce déphaseur maintenant en phase les sorties des deux modulateurs à quatre phases.

4. Modulateur d'amplitude à 16 quadratures conforme à la revendication 1, caractérisé en ce qu'un amplificateur (64, 74) est prévu dans chaque boucle de phase entre le détecteur de phase différentiel et l'oscillateur commandé par tension, ledit amplificateur consistant en deux amplificateurs montés en parallèle, l'un étant un amplificateur opérationnel et l'autre un amplificateur vidéo, lesdits amplificateurs opérationnel et vidéo étant couplés par un circuit à résistance et capacité.

# Fig 1

# Fig 2

FIG. 3

0 114 761

# FIG.4

0 114 761

621

OPERATIONAL
AMPLIFIER

$\mathcal{C}1$

$\mathcal{C}3$

$\mathcal{C}2$

622

VIDEO
AMPLIFIER

Fig_5_